# EUROPEAN PATENT SPECIFICATION

(11) **EP 2 572 907 B1**
(45) Date of publication and mention of the grant of the patent: **25.03.2015**
(21) Application number: 12185204.0
(22) Date of filing: 20.09.2012
(51) Int. Cl.: B60D 1/62, B62D 49/06

(54) **Control system for a hydraulically operated tool connected to an agricultural tractor, and a method for using the same**
Steuersystem für ein hydraulisch betätigtes Werkzeug, der mit einem landwirtschaftlichen Traktor verbunden ist, und ein Verfahren zur Verwendung der gleichen
Système de commande pour un outil à actionnement hydraulique relié à un tracteur agricole, et un procédé pour utiliser le même

(30) Priority: 26.09.2011 FI 20110326
(43) Date of publication of application: 27.03.2013
(73) Proprietor: Oy El-Ho Ab, 68910 Bennäs (FI)
(72) Inventor: West, Filip, 68910 Bennäs (FI); Löfbacka, Johan, 68910 Bennäs (FI); Häggblom, Karl-Erik, 68910 Bennäs (FI)
(74) Representative: Kolster Oy Ab

(56) References cited:
- EP-A1- 0 824 860
- US-A- 6 061 617
- US-A1- 2008 195 268

## Description

### Technical field

The present invention relates to a control system for hydraulically operated tools connected to ordinary agricultural tractors according to a device described in the preamble of claim 1.

The invention further relates to a method for utilizing such a control system according to the preamble of claim 7.

### Prior art

In order to achieve better cooperation between a tractor and a tool, the development of various electronic control systems for tractors and agricultural machines has been very rapid during the past decades. Tractors and their tools are manufactured in different factories, most often also by different companies. Consequently, also tractor electronics and electronics for tools are often developed separately from each other.

The difficulty to achieve common standards for the communication between these different control systems is clearly illustrated by the fact that the ISO standard 11783, i.e. what is called the ISOBUS standard, which sets the framework for the electronic communication between tractors and tools, was introduced as early as in 1991, in other words more than 20 years ago. The start was slow and, in 2008, the largest tractor and tool manufacturers and their electronics suppliers merged into Agricultural Industry Electronics Assosiation (AEF) to further promote the ISOBUS development and to enable tractors and tools to directly understand and utilize each other's electronic control systems.

In 2009, the five largest manufacturers in Europe founded Compentenc Center ISOBUS (CCI e.V.) to further boost the development in the field.

Unfortunately, the task has evidently been more difficult than expected, for example because of the very large variety of different tool manufacturers and also because of the very diverse ages of work machines, particularly tractors.

The first solutions applicable in practice, in which the electronics of the tool utilize an ISOBUS-compatible, standardized user interface (virtual terminal) positioned in the tractor, have attracted a lot of attention at international exhibitions during the past few years.

A project in which the cooperation between tractor has gone as long as the tool taking over given control functions of the tractor for optimum performance was presented for the first time by John Deere at Agritechnica in 2009. These solutions were carried out according to the ISOBUS Class 3 standard.

Unfortunately, difficulties are common here because the motor, transmission, emission and other control systems of the tractors are extremely complex and, therefore, sensitive to disturbances in their internal communication. In most cases, the communication takes place on the CanBus basis, where all units are connected to each other and continuously exchange information.

The ISOBUS 3 system is also very demanding from the safety point of view, and the safety aspects when the tool is connected and given a chance of giving commands to the CAN bus of the tractor are, for the time being, only at the stage of research. It has been nearly impossible to clearly define the issue of responsibility among tractor and tool manufacturers, for instance in cases of failure or in possible accident conditions.

Therefore, there are generally no such systems on the market today. Only systems where a tool of a certain model and of a certain brand is able to cooperate with a tractor of a certain model by a certain manufacturer have been presented. This might be illustrated by the publication US 6,061,617, which content is taken as basis for the preamble features of claims 1 and 6, for instance. Within a medium-term period, there seems to be no prospect of full integration of control systems for tractors and tools.

### Presentation of the problem

To be able to simply achieve an intermediate goal of the ISOBUS Class 3 standardization and to be able to utilize the units already existing in today's tractors and tools that are not Class-3-compatible, there are provided a control system for hydraulically operated tools connected to ordinary agricultural tractors as well as a method utilizing this control system according to the present invention. This task is resolved in accordance with the invention by providing a control system for hydraulically operated tools connected to an agricultural tractor according to the invention with the features disclosed in claim 1 and by providing the method for utilizing a control system for hydraulically operated tools connected to an agricultural tractor according to the invention with the features disclosed in claim 6.

The subsequent dependent claims present appropriate further developments and variations of the invention which further improve its operation.

The invention is based on the idea that the control system of the tool takes over the control of the hydraulic valves of the tractor.

The primary advantage of the invention is the safety and simplicity when the hydraulic valves in the tractor or some of them become controlled by signals from the tool at the same time as disturbances in the other electronically operated units of the tractor are completely eliminated.

Further advantages and details of the invention become apparent from the description below.

### Brief description of the figures

In the following, a preferred embodiment of the invention is described with the aid of the following principled drawings.
Figure 1 shows a principled rear view of a tractor and a tool provided with several hydraulic cylinders for adapting the surface pressure and/or the working depth to the varying conditions prevailing in fields.
Figure 2 shows a detailed view of DET. A of Figure 1, i.e. the hydraulic valve unit of the tractor with the related equipment.
Figure 3 shows a principled view of how the CAN-bus-controlled units of the tractor are connected to a computer ECU of the tractor in an embodiment according to the prior art. The hydraulic valve unit for external hydraulics is represented in this view by Device 3.
Figure 4 shows a principled view of the same CAN bus system, to which a connecting unit has been introduced to separate, when required, the hydraulic valve unit (Device 3) completely from the CAN bus line of the tractor and to transfer the unit to the CAN bus of the tool.

### Preferred embodiment

The above-mentioned drawings do not show the control system for a hydraulically operated tool connected to an agricultural tractor in scale but only serve to illustrate structural solutions of the preferred embodiment and the function of the embodiment. Hereby, the respective structural parts shown in the figures and denoted with reference numerals correspond to the structural solutions presented in the description below.

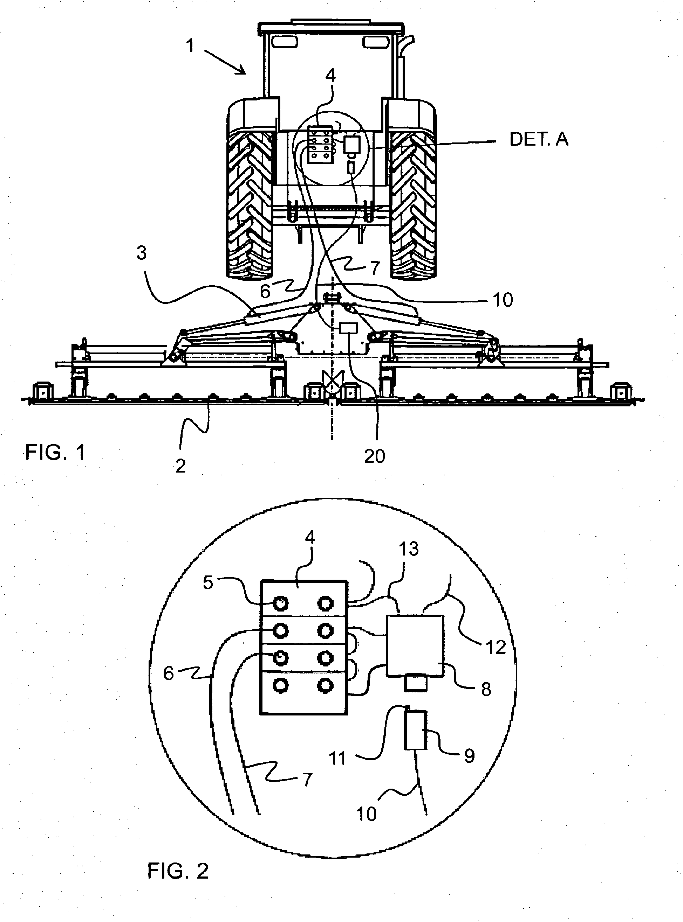

Figure 1 shows a rear view of a tractor 1 and a tool 2 provided with hydraulic cylinders 3. At the back of the tractor, there is a hydraulic valve unit 4 for external hydraulics. Figure 2 shows a detailed view of this hydraulic valve unit with the related equipment. Thus, the hydraulic valve unit 4 is provided with hydraulic quick couplings 5, to which hydraulic hoses 6 and 7 of the tool 2 are connected. Further, the figure shows a connecting unit 8 and a contact 9 connectable to it for a CAN bus 10 passing from the tool to those sections of the valve unit that are needed to control the tool 2. The contact 9 shows a signaller symbolized by a protruding part 11 of the contact. Such a protruding part may preferably be arranged to activate a switch positioned inside the connecting unit. Joined to the connecting unit 8 are, in addition to said CAN bus 10 of the tool, also a CAN bus 12 of the tractor as well as a separate CAN bus 13 to the rest of the sections of the valve unit and further to the other CAN-bus-controlled units of the tractor.

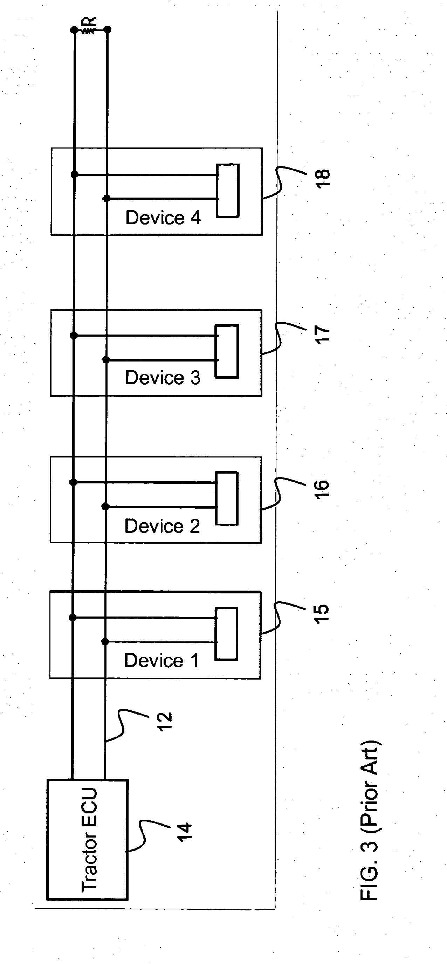

Figure 3 shows a principled view of an ordinary CAN bus system of the tractor. A mainframe computer (ECU) 14 of the tractor is connected to the CAN-bus-compatible units 15, 16, 17 and 18, here called Device 1, Device 2, etc. The CAN bus 12 of the tractor usually terminates in a resistor R for counteracting inductive disturbances.

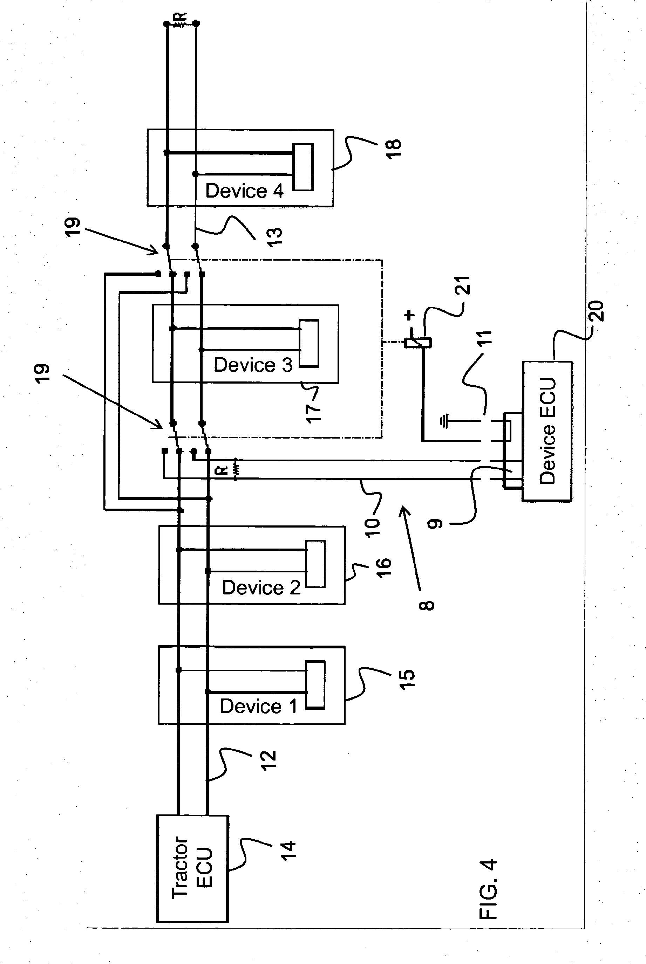

Figure 4 shows a principled view of the CAN bus system of the same tractor 1, with the present connecting unit 8 mounted. The connecting unit consists, in a preferred embodiment, of a multipolar change-over switch relay 19 of a 'brake before make' type. Further shown is the contact 9 of the connecting unit for connection of the CAN bus of the tool 2 from the control unit (ECU) 20 of the tool. The contact 9 is provided with a signaller 11 formed of two internally short-circuited poles. Of these poles, one is connected, at the connection to the connecting unit, to a drawing reel 21 of the change-over switch relay, the other to the ground. The other pole from a drawing reel 15 of the change-over switch relay is connected to a positive feeder from the tractor.

The control system according to the invention operates in the following manner. The connecting unit 8 is mounted on the tractor 1 which is to operate the tool 2. Usually, the connecting unit is kept on the tractor at least for the whole working season. If a tool is to be used on several different tractors during the season, each of the tractors is provided with a similar connecting unit.

When the tool 2 is connected to the tractor 1, and the CAN bus contact 9 of the tool is joined to the connecting unit 8, activation of the drawing reel 21 of the change-over switch relay 19 takes place via the poles connected together in the signaller 11 of the contact 9, which poles connect the drawing reel to the ground (i.e. the minus pole of the tractor). The connecting unit connected to the CAN bus 12 of the tractor releases one or more CAN bus units from the control circuit of the tractor before the control unit 20 of the tool takes over the control of said CAN bus unit.Since the change-over switch relay 19 is of the type 'brake before make', those hydraulic valve sections which are needed for the control of the tool 2 are released first from the CAN bus 12 of the tractor. Immediately after that, they are connected to receive signals from the CAN bus 10 of the tool, which hereby takes over the control of this valve group completely.

The rest of the valve sections as well as the other CAN bus units of the tractor remain, in the same way as in the original state, connected to the CAN bus of the tractor.

The advantage with the control system according to the invention is that there is no risk of the control signals of the tool 2 interfering with the other CAN bus functions of the tractor 1. Therefore, no expensive or time-consuming tests or certifications between each specific tractor and each specific tool are needed to guarantee safety, and possible malfunction in the rest of the CAN bus system of the tractor is eliminated.

Significant savings are achieved since the tractor 1 and the tool 2 don not need a double set of electrically controlled hydraulic valves. Further, significant energy saving is achieved since the hydraulic oil does not have to continuously circulate between the tractor and the hydraulic valves of the tool, Device 1, Device 2, etc. but the hydraulics of the tractor is only loaded at the moment when hydraulic cylinders of the tool need to carry out a regulating function, which, in most cases, takes only a fraction of the total working time.

Naturally, the invention is not confined to the above-described preferred embodiment but a plurality of variations thereof are feasible within the scope of the claims below.

Thus, corresponding effects can also be achieved even if the connecting unit 8 is, instead of a multipolar change-over switch relay 19 of a 'brake before make' type, formed of an electronic control circuit with corresponding connecting function, for example of a thyristor or a MOFSET type. Further, the contact 9 for the CAN bus line 10 of the tool 2 may be equipped, instead of with the two poles, with another kind of signaller, and the connecting unit may be equipped with some kind of signal receiver for that, so that the change-over switch relay changes place when the CAN bus contact 9 of the tool is connected to the tractor. Alternatively, the connecting unit 8 may be formed of some kind of electronic control circuit that makes the signal receiver change status when the CAN bus contact of the tool is connected. The connecting unit 8 may also be formed of a simple manual change-over switch relay that first breaks the CAN bus line 12 of the hydraulic valves before these are connected to the CAN bus of the tool.

The control system described in the present solution is naturally not confined only to the controlling of valves of the tractor 1 for outer hydraulics but it may also preferably be used for allowing a tool to control another CAN bus unit of the tractor in the spirit of the ISOBUS Class 3 when it is desirable to avoid a situation where the tool control in a tool or tractor, respectively, which is not completely Class-3-certified or -tested could interfere with each other's other functions.

## Claims

1. Control system for hydraulically operated tools (2) connected to ordinary agricultural tractors (1), having
a connecting unit (8) arranged on one or more CAN bus units of the tractor (1) and arranged to release these CAN bus units from the control circuit of the tractor before a control unit (20) of the tool (2) takes over the control of said CAN bus units, **characterized** in that
the connecting unit (8) comprises a contact (9), which contact comprises a signaller (11) arranged to activate the change-over switch relay when the tool (2) is connected to the tractor (1).

2. A control system according to claim 1, **characterized** in that the connecting unit (8) comprises a multipolar change-over switch relay (19) of the type 'brake before make'.

3. A control system according to claim 1 or 2, **characterized** in **that** the connecting unit (8) comprises an electronic change-over circuit without a relay.

4. A control system according to claim 1, **characterized** in that the signaller (11) of the tool (2) comprises two internally short-circuited poles.

5. A control system according to claim 1, **characterized** in that the signaller (11) of the tool (2) comprises a protruding part which activates a switch positioned inside the connecting unit (8).

6. A method for controlling a system for hydraulically operated tools (2) connected to ordinary agricultural tractors (1),
providing the system with a connecting unit (8);
this connecting unit releasing at least one CAN bus unit of the tractor (1) from the control circuit of the tractor, after which
a control unit (20) of the tool (2) takes over the control of said CAN bus units,
**characterized** by
the connecting unit (8) is connected to a contact (9) of a CAN bus (10) of the tool,
which contact is provided with a signaller (11), whereby
the signaller activates in cooperation with the connecting unit (8) a change-over switch relay (19) comprised by the unit when the tool (2) is connected to the tractor (1).

## Patentansprüche

1. Steuersystem für hydraulisch betätigte Werkzeuge (2), die mit üblichen landwirtschaftlichen Traktoren (1) verbunden sind, mit einer Verbindungseinheit (8) angeordnet auf einer oder mehreren CAN-Buseinheiten von dem Traktor (1) und angeordnet, um diese CAN-Buseinheiten von der Steuerschaltung des Traktors zu lösen, bevor eine Steuereinheit (20) von dem Werkzeug (2) die Steuerung von den besagten CAN-Buseinheiten übernimmt, dadurch **gekennzeichnet**, dass
die Verbindungseinheit (8) einen Kontakt (9) aufweist, wobei der Kontakt einen Signalgeber (11) aufweist, der angeordnet ist, um das Umschaltrelais zu aktivieren, wenn das Werkzeug (2) mit dem Traktor (1) verbunden wird.

2. Ein Steuersystem gemäß Anspruch 1, dadurch **gekennzeichnet,** dass die Verbindungseinheit (8) ein mehrpoliges Umschaltrelais (19) von der Gattung ,brake before make' aufweist.

3. Ein Steuersystem gemäß Anspruch 1 oder 2, dadurch **gekennzeichnet,** dass die Verbindungseinheit (8) einen elektronischen Umschaltkreis ohne ein Relais aufweist.

4. Ein Steuersystem gemäß Anspruch 1, dadurch **gekennzeichnet,** dass der Signalgeber (11) von dem Werkzeug (2) zwei intern kurzgeschlossene Pole aufweist.

5. Ein Steuersystem gemäß Anspruch 1, **dadurch gekennzeichnet, dass** der Signalgeber (11) von dem Werkzeug (2) einen hervorstehenden Teil aufweist, der einen Schalter aktiviert, der innerhalb der Verbindungseinheit (8) positioniert ist.

6. Ein Verfahren zum Steuern eines Systems für hydraulisch betätigte Werkzeuge (2), die mit üblichen landwirtschaftlichen Traktoren (1) verbunden sind,
Bereitstellen des Systems mit einer Verbindungseinheit (8);
diese Verbindungseinheit lösend zumindest eine CAN-Buseinheit des Traktors (1) von der Steuerschaltung des Traktors, wonach eine Steuereinheit (20) von dem Werkzeug (2) die Steuerung von den besagten CAN-Buseinheiten übernimmt,
gekennzeichnet durch
die Verbindungseinheit (8) ist mit einem Kontakt (9) von einem CAN-Bus (10) von dem Werkzeug verbunden,
der Kontakt ist mit einem Signalgeber (11) ausgestattet, wobei der Signalgeber in Zusammenarbeit mit der Verbindungseinheit (8) ein Umschaltrelais (19) umfasst durch die Einheit aktiviert, wenn das Werkzeug (2) mit dem Traktor (1) verbunden wird.

## Revendications

1. Système de commande pour outils mis en oeuvre de manière hydraulique (2) reliés à des tracteurs agricoles ordinaires (1), ayant
une unité de connexion (8) agencée sur une ou plusieurs unités de bus CAN du tracteur (1) et agencée pour libérer ces unités de bus CAN de l'emprise du circuit de commande du tracteur avant qu'une unité de commande (20) de l'outil (2) ne reprenne la commande desdites unités de bus CAN, **caractérisé en ce que**
l'unité de connexion (8) comprend un contact (9), lequel contact comprend un dispositif de signalisation (11) agencé pour activer le relais de commutateur d'inversion lorsque l'outil (2) est relié au tracteur (1).

2. Système de commande selon la revendication 1, **caractérisé en ce que** l'unité de connexion (8) comprend un relais de commutateur d'inversion multipolaire (19) du type « sans contact à court-circuit ».

3. Système de commande selon la revendication 1 ou 2, **caractérisé en ce que** l'unité de connexion (8) comprend un circuit d'inversion électronique sans relais.

4. Système de commande selon la revendication 1, **caractérisé en ce que** le dispositif de signalisation (11) de l'outil (2) comprend deux pôles court-circuités en interne.

5. Système de commande selon la revendication 1, **caractérisé en ce que** le dispositif de signalisation (11) de l'outil (2) comprend une partie saillante qui active un commutateur positionné à l'intérieur de l'unité de connexion (8).

6. Procédé pour commander un système pour des outils mis en oeuvre de manière hydraulique (2) reliés à des tracteurs agricoles ordinaires (1), comprenant
la fourniture d'une unité de connexion (8) au système ;
cette unité de connexion libérant au moins une unité de bus CAN du tracteur (1) de l'emprise du circuit de commande du tracteur, après quoi
une unité de commande (20) de l'outil (2) reprend la commande desdites unités de bus CAN,
**caractérisé par**
l'unité de connexion (8) est reliée à un contact (9) d'un bus CAN (10) de l'outil,
lequel contact est muni d'un dispositif de signalisation (11), par lequel
le dispositif de signalisation active en coopération avec l'unité de connexion (8) un relais de commutateur d'inversion (19) appartenant à l'unité lorsque l'outil (2) est relié au tracteur (1).
